# EUROPEAN PATENT APPLICATION

(11) **EP 2 149 312 A1**
(43) Date of publication of application: **03.02.2010**
(21) Application number: 09009790.8
(22) Date of filing: 29.07.2009
(51) Int. Cl.: A43B 17/14

(54) **Footwear insole and procedure for its manufacture**

(30) Priority: 29.07.2008 ES 200802336
(71) Applicant: CALZADOS ALCIÓN, S.L., 26580 Arnedo La Rioja (ES)
(72) Inventor: Saenz De Tejada Rubio, José Antonio, 26580 Arnedo La Rioja (ES)
(74) Representative: Schäfer, Matthias W.

(57) **Abstract**

Footwear insole, of the type used to support the sole of the foot, **characterised in that** it may be applied in all types of footwear and is comprised by two laminar pieces, one made of foam rubber (2) and the other of hide or fabric (3), which when joined together reveal semi-spherical protuberances (8) formed by means of a manufacturing procedure comprising the following phases: die-cutting and gluing, moulding and insertion in the footwear.

The invention presented herein offers a large degree of comfort as the semi-spherical protuberances gently massage the user's feet when they are walking and also moisturise them, as the protuberances may be impregnated with scented moisturising materials.

## Description

Footwear insole, of the type used to support the sole of the foot, **characterised in that** it may be applied in all types of footwear and is comprised by two laminar pieces, one made of foam rubber and the other of hide or fabric, which when joined together reveal semi-spherical protuberances formed by means of a manufacturing procedure comprising the following phases: die-cutting and gluing, moulding and insertion in the footwear.

There are numerous types of insoles that are widely known at this moment in time. These comprise a laminar body and are designed to be placed inside the footwear, on the sole, with the user supporting their foot on them. Said insoles are manufactured with flexible and breathable materials, though they do have the drawback of not providing the user with additional comfort when they are walking.

Solutions have been sought with a view to increasing the comfort of the user when they are walking, though they have the drawback of being expensive as a very large number of combined elements are required to make them, increasing the cost of their manufacture.

The prior art contains known solutions such as the one described in Spanish utility model U9601679, which refers to an insole with notches distributed at various points of the surface; the solution described in EP0780063, which refers to a shoe with protuberances on its inner base; or the solution described in CH661846, which refers to a sandal with protuberances on the inner sole.

In order to solve the existing problem of creating an efficient, inexpensive insole that provides a high degree of comfort for the user when they are walking, a footwear insole that is the object of this invention has been designed, which is **characterised in that** it is comprised by two laminar pieces, one made of foam rubber and the other of hide or fabric, which when joined together reveal semi-spherical protuberances formed by means of a manufacturing procedure comprising the following phases: die-cutting and gluing, moulding and insertion in the footwear.

**Die-cutting and gluing:** Said laminar pieces, made of foam rubber and of hide or fabric, are die-cut separately and to their corresponding sizes, which, after being die-cut and formed, are joined together by means of an adhesive material.

**Moulding:** This process contemplates the use of specially designed moulds, the female part of which includes an area entirely covered with semi-spherical imprints, an area in which the insole in the process of being manufactured is positioned.

Prior to the moulding required to obtain the footwear insole, nanocapsules containing scented moisturising materials may be placed on the semi-spherical imprints so that the protuberances that are formed are entirely impregnated with said products during the moulding process, guaranteeing that the user's feet are moisturised when they are walking.

The footwear insole is formed in its entirety by the pressure of the male part when the mould is closed, with the result that an insole with a fine thickness is obtained, its upper part being covered with semi-spherical protuberances, spaced from each other equidistantly, guaranteeing the user's feet are gently massaged when they are walking.

**Insertion in the footwear:** Once the insole has been pads made of a flexible material in the area of the heel and the metatarsals, with the result that when the insole is fixed on the sole cushioning pads are subsequently formed, thereby making the footwear more comfortable.

The footwear insole presented herein provides numerous advantages over the insoles currently available, the most important of them being the incorporation, by means of a moulding process, of a surface entirely covered with semi-spherical protuberances, thereby offering the user a high degree of comfort when they are walking.

Another important advantage offered by this invention, as a result of the preceding one, is that the protuberances may be impregnated with scented moisturising materials, thereby helping to moisturise the user's feet are when they are walking.

Another important advantage is the incorporation of cushioning pads between the sole of the footwear and the insole during the insertion of the insole.

To provide a better understanding of the object of the present invention, a preferred practical embodiment of said invention is shown in the plan attached.

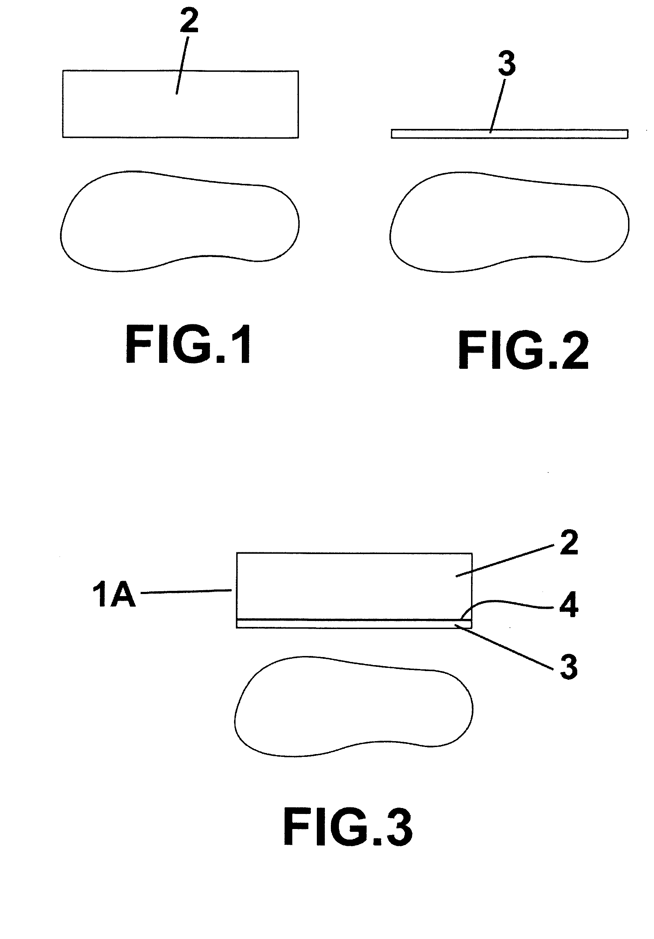

In said plan Figure 1 shows an elevated view in profile of the die-cut foam rubber piece.

Figure 2 shows an elevated view in profile of the die-cut hide or fabric.

Figure 3 shows an elevated view in profile of the footwear insole in the process of being manufactured, with the foam rubber and hide or fabric pieces joined together by adhesive.

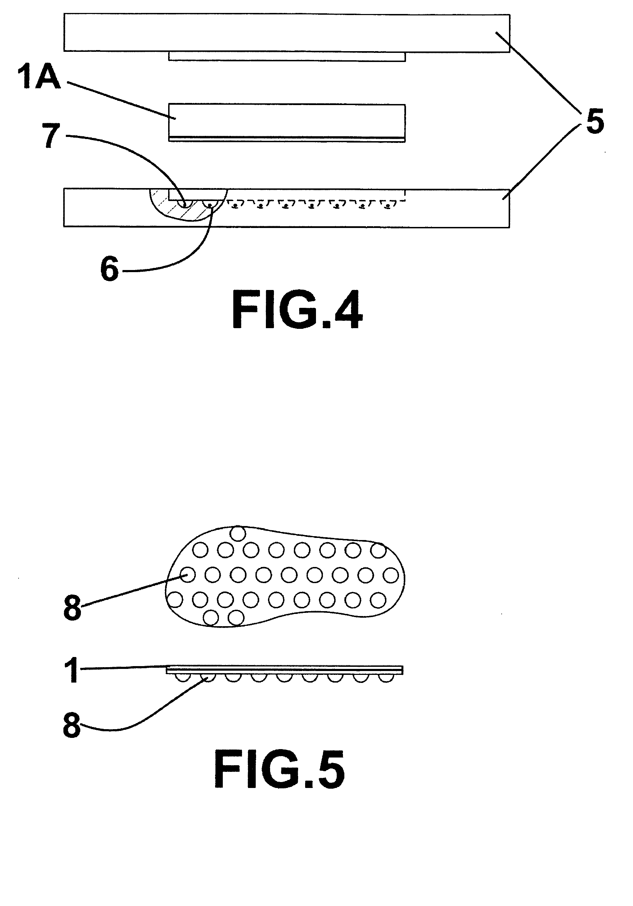

Figure 4 shows a ground view of the mould, for the incorporation of the insole in the process of being manufactured, nanocapsules containing scented moisturising products being comprised in the semi-spherical imprints of the female part.

Figure 5 shows a ground and profile view of the footwear insole obtained.

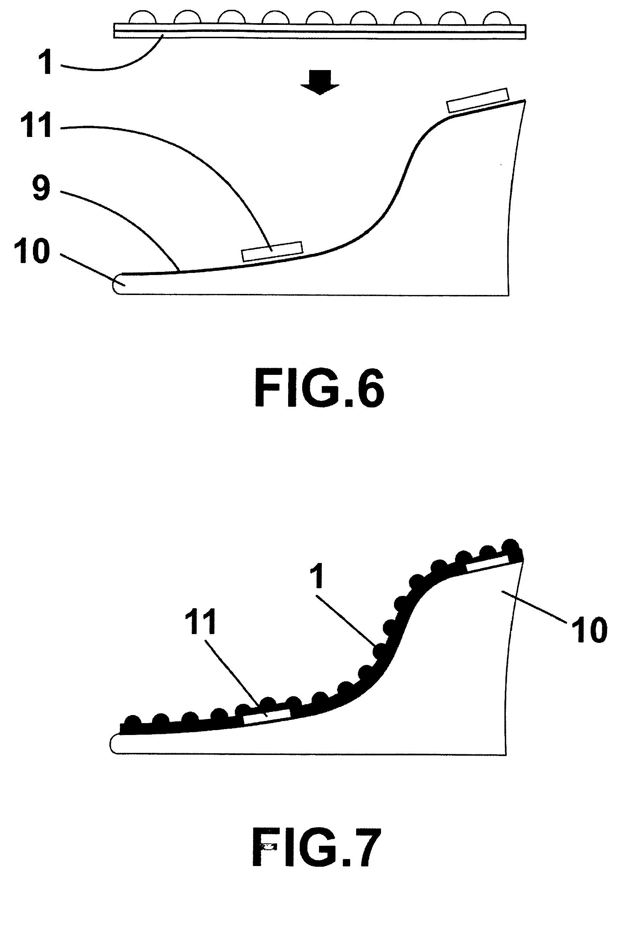

Figure 6 shows a ground view of the arrangement of pads of a flexible material on the sole of the shoe, so that when the insole is inserted cushioning pads are subsequently formed in the area of the heel and the metatarsals.

Figure 7 shows a ground view of the insole fully inserted in the footwear.

The footwear insole (1) that is the object of the present invention is **characterised in that** it is comprised by two laminar pieces, one made of foam rubber (2) and the other of hide or fabric (3) which when joined together reveal semi-spherical protuberances (8) formed by means of a manufacturing procedure comprising the following phases: die-cutting and gluing, moulding and insertion in the footwear.

**Die-cutting and gluing:** Said laminar pieces, made of foam rubber (2) and of hide or fabric (3) are die-cut separately and to their corresponding sizes, which, after being die-cut and formed, are joined together by means of an adhesive material (4).

**Moulding:** This process contemplates the use of specially designed moulds (5) the female part of which includes an area entirely covered with semi-spherical imprints (6), an area in which the footwear insole (1A) in the process of being manufactured is positioned.

Prior to the moulding required to obtain the footwear insole (1), nanocapsules (7) containing scented moisturising materials may be placed on the semi-spherical imprints (6) so that the protuberances (8) that are formed are entirely impregnated with said products.

The footwear insole (1) is formed in its entirety by the pressure of the male part (5), with the result that an insole with a fine thickness is obtained, its upper part being covered with semi-spherical protuberances (8), spaced from each other equidistantly.

**Insertion in the footwear:** Once the footwear insole (1) has been created it is placed on the sole (9) of the footwear (10) which includes pads (11) made of a flexible material in the area of the heel and the metatarsals, with the result that when the insole (1) is fixed on the sole (9), cushioning pads (12) are subsequently formed.

## Claims

1. Footwear insole, of the type used to support the sole of the foot, wherein it may be applied in all types of footwear and is comprised by two laminar pieces, one made of foam rubber (2) and the other of hide or fabric (3), which when joined together reveal semi-spherical protuberances formed on the entire surface of the laminar piece made of hide or fabric (3).

2. Manufacturing procedure for the creation of the footwear insole of claim 1, **wherein** it comprises the following phases: die-cutting and gluing, moulding and insertion in the footwear.

3. Manufacturing procedure according to claim 2, **wherein,** in the ***die-cutting and gluing phase*,** the laminar pieces made of foam rubber (2) and of hide or fabric (3) are die-cut separately and to their corresponding sizes, which, after being die-cut and formed, are joined together by means of an adhesive material (4).

4. Manufacturing procedure according to claims 2 and 3, **wherein,** in the ***moulding*** phase, the use of specially designed moulds (5) is contemplated, the female part of which includes an area entirely covered with semi-spherical imprints (6), an area in which the footwear insole (1A) in the process of being manufactured is positioned.

5. Manufacturing procedure according to claims 2 to 4, **wherein,** in the ***moulding*** phase, prior to the moulding required to obtain the footwear insole (1), nanocapsules (7) containing scented moisturising materials may be placed on the semi-spherical imprints (6) so that the protuberances (8) that are formed are entirely impregnated with said products during the moulding process.

6. Manufacturing procedure according to claims 2 to 5, **wherein,** in the ***moulding*** phase, the footwear insole (1) is formed in its entirety by the pressure of the male part (5), with the result that an insole with a fine thickness is obtained, its upper part being covered with semi-spherical protuberances (8), spaced from each other equidistantly.

7. Manufacturing procedure according to claims 2 to 6, **wherein,** in the ***insertion-in-the-footwear*** phase, the footwear insole (1) created is placed on the sole (9) of the footwear (10) which includes pads (11) made of a flexible material in the area of the heel and the metatarsals, with the result that when the insole (1) is fixed on the sole (9), cushioning pads (12) are subsequently formed.
